# DEMANDE DE BREVET EUROPEEN

(11) **EP 0 721 121 A1**
(43) Date de publication de la demande: **10.07.1996**
(21) Numéro de dépôt: 95402908.8
(22) Date de dépôt: 21.12.1995
(51) Int. Cl.: G02B 6/293, G02B 6/34, H01S 3/06, H04B 10/18

(54) **Filtre pour lumière guidée et liaison optique incluant ce filtre**

(30) Priorité: 28.12.1994 FR 9415792
(71) Demandeur: ALCATEL SUBMARCOM, F-92110 Clichy (FR)
(72) Inventeur: Riant, Isabelle, F-91120 Palaiseau (FR); Sansonetti, Pierre, F-91120 Palaiseau (FR)
(74) Mandataire: Pothet, Jean Rémy Emile Ludovic

(57) **Abrégé**

L'inventiion fournit un filtre Fabry-Perot pour lumière guidée, ce filtre comportant deux réseaux de Bragg (R1, R2) se succédant sur un même guide de lumière (G), ces deux réseaux laissant entre eux un intervalle (D), ce filtre étant caractérisé par le fait que ces deux réseaux présentent des longueurs respectives (L1 et L2) différentes

L'invention s'applique notamment aux systèmes de télécommunication à fibres optiques.

## Description

La présente invention concerne le filtrage optique. Elle trouve plus particulièrement application dans les systèmes de télécommunication à fibres optiques avec multiplexage spectral et plus particulièrement encore dans les liaisons optiques à solitons.

Les liaisons à fibres optiques comportent typiquement des amplificateurs pour compenser les pertes en ligne. Pour limiter le bruit introduit par ces amplificateurs dans des liaisons à multiplexage spectral il est connu d'insérer des filtres Perot Fabry dont le coefficient de transmission présente un maximum pour chacun des canaux spectraux multiplexés. Plus particulièrement, dans les liaisons à solitons avec multiplexage spectral, de tels filtres permettent en même temps d'éviter des dérives des longueurs d'onde des solitons.

Dans ces liaisons à multiplexage spectral des différences de niveaux gênantes apparaissent entre les divers canaux. Elles sont typiquement le résultat de différences entre les gains fournis à ces canaux par les amplificateurs.

La présente invention a notamment pour but de supprimer ou du moins de limiter de telles différences de niveau.

Dans ce but elle a notamment pour objet un filtre pour lumière guidée, ce filtre comportant deux réseaux de Bragg se succédant sur un même guide de lumière laissant entre eux un intervalle pour constituer ensemble un filtre Fabry-Pérot dont le coefficient de transmission présente une succession de maximums locaux en fonction de la longueur d'onde, ce filtre étant caractérisé par le fait que ces deux réseaux présentent un différence mutuelle introduisant des différences entre les valeurs desdits maximums locaux de coefficient de transmission.

A l'aide des figures schématiques ci-jointes on va décrire ci-après, à titre d'exemple non limitatif comment cette invention peut être mise en oeuvre.

La figure 1 représente un filtre analogue à un filtre connu.

La figure 2 représente un filtre selon cette invention.

Les figures 3 et 4 représentent respectivement le diagramme de variation du coefficient de transmission de ces deux filtres en fonction de la longueur d'onde portée en abscisse.

La figure 5 réprésente une liaison utilisant le filtre selon l'invention.

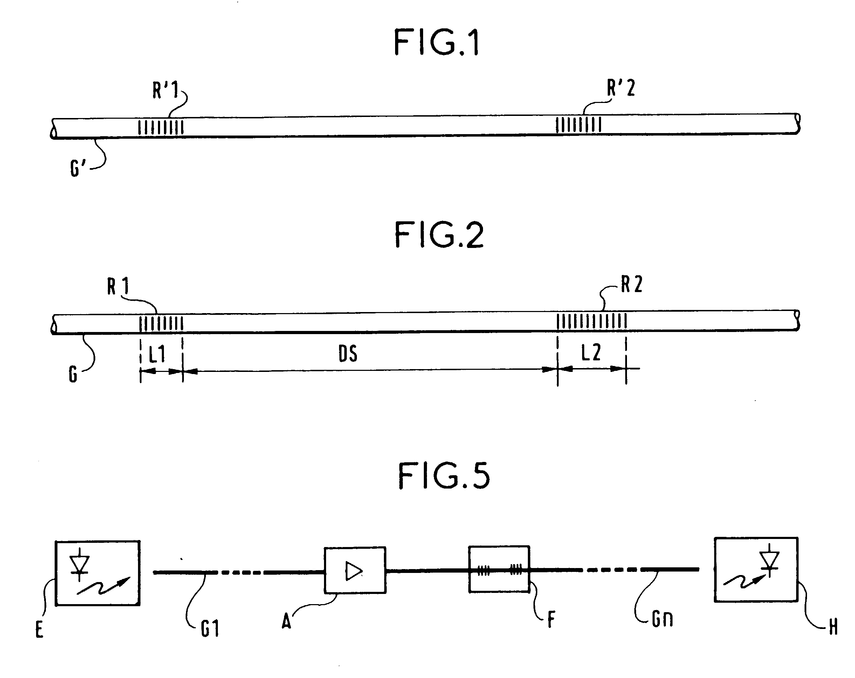

Conformément à la figure 2 un filtre selon cette invention comporte deux réseaux de Bragg R1, R2 se succédant sur un même guide de lumière G pour réfléchir chacun partiellement une lumière guidée à filtrer. Ces deux réseaux laissent entre eux un intervalle D pour constituer ensemble un filtre Fabry-Pérot dont le coefficient de transmission présente une succession de maximums locaux M1...M10 en fonction de la longueur d'onde. Ces deux réseaux présentent une différence mutuelle introduisant des différences entre les valeurs desdits maximums locaux de coefficient de transmission. Ces différences peuvent être notamment utilisées pour compenser des différences parasites de niveau apparaissant entre des ondes dont les longueurs d'onde coïncident respectivement avec ces maximums locaux. Cette différence entre les deux réseaux de Bragg comporte avantageusement une différence entre leurs longueurs respectives L1 et L2.

A titre d'exemple chacun de ces deux réseaux est un réseau à pas fixe et les longueurs d'onde d'accord et les contrastes d'indices de réfraction des deux réseaux sont identiques. Une différence de contraste pourrait cependant être utilisée, mais sa réalisation serait plus complexe.

Le guide de lumière G est typiquement une fibre optique.

A titre d'exemple le filtre de la figure 1 est analogue à celui qui est décrit dans l'article "Fiber Fabry-Perot interferometer using side exposed fiber Bragg gratings" W.W. Morey, T.J. Bailey, W.H. Glenn, G. Meltz, OFC'92 WA2, page 96. Il comporte sur un guide G' deux réseaux identiques R'1 et R'2 de longueur O,25 mm séparés par une distance de 2,06 mm et accordés sur une longueur d'onde de 1 558 nm environ. Les réseaux R1 et R2 du filtre F de la figure 2 ont des longueurs respectives de O,25 mm et de O,35 mm et sont séparés par une distance de 2,01 mm, la longueur d'onde d'accord étant la même que ci-dessus.

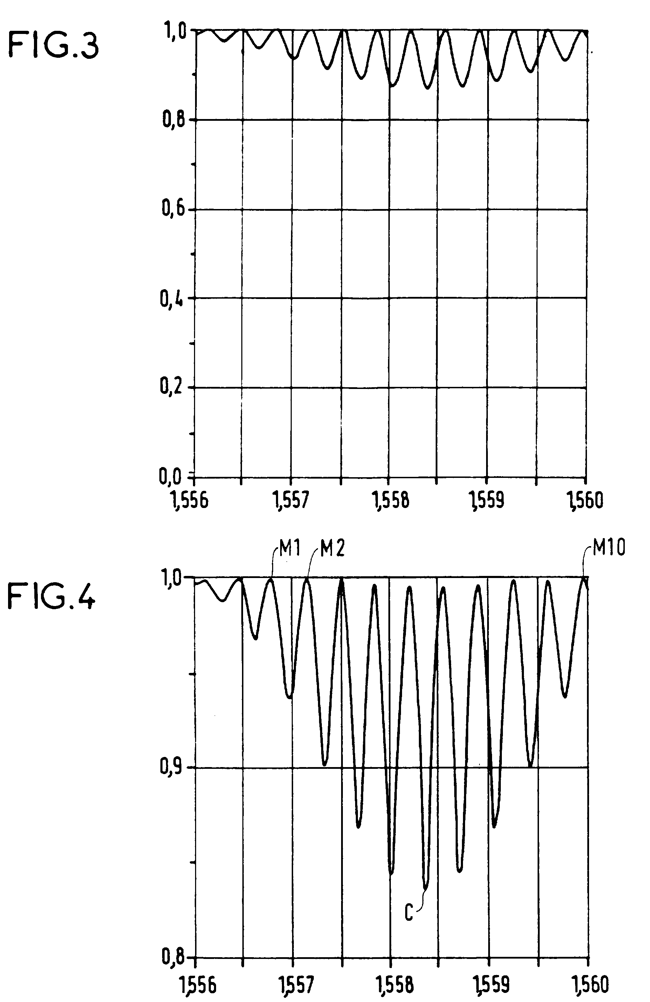

Les diagrammes des figures 3 et 4 ont été établis par le calcul dans le cas où un accord de phase à été réalisé entre les deux réseaux de Bragg, ce qui peut notamment être obtenu en réalisant ces deux réseaux au cours d'une même opération d'inscription. Une telle opération peut être effectuée par les méthodes connues.

Selon la présente invention on réalise de préférence un tel accord de phase.

La présente invention a également pour objet une liaison à fibres optiques, notamment une liaison à solitons, utilisant le filtre précédemment décrit. Cette liaison à fibres optiques comporte les éléments suivants :
- Un émetteur E pour émettre des signaux optiques porteurs d'information et occupant des canaux se succédant régulièrement dans une bande spectrale constituant une bande de transmission. Ces signaux présentent typiquement dans chaque canal la forme de solitons.
- Des fibres de ligne G1...Gn se succédant en série pour constituer une ligne transmettant ces signaux.
- Au moins un amplificateur A inséré en série dans la ligne. Il s'agit typiquement d'une succession d'amplificateurs à fibres optiques dopées à l'erbium. Ils sont utilisés pour compenser les pertes en lignes. Chaque amplificateur présente un gain dans chacun de ces canaux. Le diagramme représentatif de ce gain en fonction de la longueur d'onde centrale de ce canal présente typiquement une courbure constituant une courbure de ce gain.
- Au moins un filtre F inséré dans la ligne. Il s'agit typiquement d'une succession de filtres respectivement associés aux amplificateurs. Chaque filtre comporte deux réseaux de Bragg R1, R2 se succédant sur un guide de lumière G typiquement constitué par une fibre incluse en série dans la liaison. Ces deux réseaux se succèdent en laissant entre eux un intervalle D pour constituer ensemble un filtre du type Fabry-Perot dont le coefficient de transmission présente, en fonction de la longueur d'onde, une succession régulière de maximums locaux M1...M10 visibles sur la figure 4. Ces maximums coïncident avec les longueurs d'onde centrales des canaux. De préférence ces longueurs d'onde centrales se répartissent sur ces maximums locaux d'une manière symétrique par rapport à un minimum central C du coefficient de transmission.
- Enfin un récepteur H pour recevoir les signaux optiques en sortie de la ligne et pour restituer l'information qui était portée par les signaux.

La liaison ainsi constituée présente pour chaque canal un gain composite croissant avec le gain de chaque amplificateur pour ce canal. Ce gain composite croit aussi avec un maximum local de coefficient de transmission de chaque filtre, ce maximum étant celui qui coïncide avec la longueur d'onde centrale de ce canal. Dans le cas simple où la ligne comporterait un seul amplificateur et un seul filtre et où tous ses autres organes auraient des gains ou des pertes indépendants de la longueur d'onde, le gain composite serait pour chaque canal proportionnel au produit du gain de l'amplificateur par le maximum local du coefficient de coefficient de transmission du filtre. Cependant compte tenu des pertes en ligne le gain composite sur un pas d'amplification est typiquement nul lorsqu'il est exprimé en décibels.

Conformément à cette invention les deux réseaux R1 et R2 du filtre F, c'est-à-dire d'au moins un filtre et de préférence de tous les filtres de la succession précédemment mentionnée présentent une différence mutuelle introduisant entre les valeurs des maximums locaux du coefficient de transmission de ce filtre des différences utiles propres à compenser au moins partiellement des différences parasites apparues par ailleurs entre les gains composites de la liaison pour les divers canaux.

Le but recherché est bien entendu d'obtenir l'égalité entre les gains composites des divers canaux.

Typiquement chaque filtre est utilisé pour compenser la courbure du gain d'un amplificateur associé dans une ligne comportant de nombreux amplificateurs. La compensation est alors répartie sur la longueur de la ligne. Ceci est particulièrement souhaitable dans une liaison à solitons car l'énergie d'un soliton ne doit subir que des variations limitées.

Pour cela, comme précédemment indiqué, la différence entre les deux réseaux du filtre est de préférence seulement une différence entre leurs longueurs.

## Revendications

1. Filtre Fabry-Perot pour lumière guidée, ce filtre comportant deux réseaux de Bragg (R1, R2) se succédant sur un même guide de lumière (G), ces deux réseaux laissant entre eux un intervalle (D), ce filtre étant caractérisé par le fait que ces deux réseaux présentent des longueurs respectives (L1 et L2) différentes.

2. Filtre selon la revendication 1 caractérisé par le fait que les deux réseaux de Bragg (R1, R2) présentent une même longueur d'onde d'accord.

3. Filtre selon la revendication 3 caractérisé par le fait que les deux réseaux de Bragg (R1, R2) présentent une concordance mutuelle de phase.

4. Liaison à fibres optiques comportant :
- un émetteur (E) pour émettre des signaux optiques porteurs d'information et occupant des canaux se succédant régulièrement dans une bande spectrale constituant une bande de transmission,
- des fibres de ligne (G1...Gn) se succédant en série pour constituer une ligne transmettant ces signaux,
- au moins un amplificateur (A) inséré en série dans la ligne, chaque amplificateur présentant un gain dans chacun de ces canaux,
- au moins un filtre (F) inséré dans la ligne, chaque filtre comportant deux réseaux de Bragg (R1, R2) se succédant sur un guide de lumière (G) en laissant entre eux un intervalle (D) pour constituer ensemble un filtre du type Fabry-Perot dont le coefficient de transmission présente, en fonction de la longueur d'onde, une succession régulière de maximums locaux coïncidant avec les longueurs d'onde centrales des canaux, et
- un récepteur (H) pour recevoir les signaux optiques en sortie de la ligne et pour restituer l'information qui était portée par les signaux,
la liaison ainsi constituée présentant pour chaque canal un gain composite croissant avec le gain de chaque amplificateur pour ce canal, ce gain composite croissant aussi avec un maximum local de coefficient de transmission de chaque filtre, ce maximum étant celui qui coïncide avec la longueur d'onde centrale de ce canal,
cette liaison étant caractérisée par le fait que les deux réseaux (R1 et R2) dudit filtre (F) présentent des longueurs respectives différentes introduisant entre les valeurs des maximums locaux du coefficient de transmission de ce filtre des différences utiles propres à compenser au moins partiellement des différences parasites apparues par ailleurs entre les gains composites de la liaison pour les divers canaux.
